# EUROPÄISCHE PATENTSCHRIFT

(11) **EP 1 440 633 B1**
(45) Veröffentlichungstag und Bekanntmachung des Hinweises auf die Patenterteilung: **03.08.2005**
(21) Anmeldenummer: 03027975.6
(22) Anmeldetag: 05.12.2003
(51) Int. Cl.: A47C 3/30

(54) **Säuleneinheit**
Adjustable column
Colonne télescopique

(30) Priorität: 25.01.2003 DE 10302984
(43) Veröffentlichungstag der Anmeldung: 28.07.2004
(73) Patentinhaber: Stabilus GmbH, D-56070 Koblenz (DE)
(72) Erfinder: Pooschen, Harald, Dipl.-Ing., 56072 Koblenz (DE)
(74) Vertreter: Klein, Thomas, Dipl.-Ing.

(56) Entgegenhaltungen:
- EP-A- 0 566 045
- DE-A- 2 453 105
- DE-A- 3 522 386
- DE-C- 621 149
- GB-A- 1 290 530
- US-A- 4 871 138
- US-A- 5 188 345
- US-A- 6 125 521

## Beschreibung

Die Erfindung bezieht sich auf eine Säuleneinheit, insbesondere Stuhlsäuleneinheit, mit einem feststehenden Standrohr, das ein unteres Standrohrende und ein oberes Standrohrende besitzt, wobei im Bereich des oberen Standrohrendes in dem Standrohr ein Teleskoprohr und in dem Teleskoprohr ein Zylinder einer Gasfeder axial verschiebbar geführt ist, mit einer einseitig aus dem Zylinder der Gasfeder herausragenden Kolbenstange, deren freies Ende im Bereich des unteren Standrohrendes an dem Stanrohr befestigt ist, mit einem Mitnehmeranschlag des Zylinders der Gasfeder, durch den das Teleskoprohr bei axialer Bewegung der Gasfeder aus dem Standrohr mitnehmbar ist, und mit einem Sicherungselement, durch das eine axiale Bewegung des Teleskoprohres aus dem Standrohr begrenzbar ist.

Bei einer derartigen Säuleneinheit ist es bekannt, ein Teleskoprohr, das in einem Standrohr axial beweglich angeordnet ist, gegen eine ungewollte Demontage zu schützen. Das Teleskoprohr weist dazu einen mit einer Blattfeder belasteten Auszugsbegrenzungsstift auf, der in ein Langloch des Standrohrs eingreift. Der Hub, den das Teleskoprohr gegenüber dem Standrohr vollziehen kann, wird von der Länge des Langlochs bestimmt. Diese Sicherung gegen das Lösen des Teleskoprohrs aus dem Standrohr erfordert einen hohen mechanischen Aufwand. Zum einen muß im Standrohr ein Langloch erzeugt werden. Zum anderen muß der Auszugsbegrenzungsstift mit der Blattfeder im Teleskoprohr montiert werden.

Es ist weiterhin eine Sicherung mit einem Auszugsbegrenzungsring bekannt, der in einer Ringmulde des Teleskoprohrs angeordnet ist. Das untere Ende einer zusätzlich im Standrohr angeordneten Führungsbuchse, deren Innendurchmesser kleiner als der Außendurchmesser des Auszugsbegrenzungsrings aber größer als der Außendurchmesser des Teleskoprohrs ist, bildet einen Anschlag, auf den der Auszugsbegrenzungsring beim Ausfahren des Teleskoprohrs auftrifft. Die Anordnung des Auszugsbegrenzungsrings in einer Ringmulde des Teleskoprohrs schließt sich an die Führungsfläche an und führt somit zu einer Vergrößerung der Gesamtbaulänge, die für die Höhenverstellung nicht genutzt werden kann. Bei der Demontage wird beim Überschreiten einer vorbestimmten Mindestauszugskraft der Auszugsbegrenzungsring aufgrund seiner Elastizität vom Anschlag aus der Ringmulde gedrückt und abgestreift. Ein Auszugsbegrenzungsring mit einer hohen Elastizität erlaubt eine leichte Demontage. Nachteilig ist jedoch die geringe Mindestauszugskraft, die zu einer ungewollten Demontage und somit zum kompletten Bauteilversagen führen kann. Als weiterer Nachteil kommt hinzu, daß die bekannten Sicherungen am Ende des Teleskoprohrs angeordnet sind. Bei einem von der Längsachse abweichenden Kraftangriff an der Säuleneinheit kommt es im Bereich der Sicherung zu den größten Belastungen, die die Lebensdauer der Sicherung verringern. Dokument US-A- 6125527 zeigt die Merkmale des Oberbegriffs von Anspruch 1.

Der vorliegenden Erfindung liegt daher die Aufgabe zugrunde, eine Säuleneinheit der eingangs genannten Art zu schaffen, bei der die Sicherung gegen einen von der Längsachse abweichenden Kraftangriff besser geschützt ist. Die Sicherung soll weiterhin ohne eine Verlängerung der Gesamtbaulänge auskommen. Darüber hinaus soll die Sicherung einfach aufgebaut und leicht zu montieren sein sowie nicht zu einer Durchmesservergrößerung des Teleskoprohres führen.

Diese Aufgabe wird erfindungsgemäß dadurch gelöst, daß das Sicherungselement an dem Standrohr angeordnet ist und mit radial nach innen gerichteter federnder Vorspannung an der äußeren zylindrischen Mantelfläche des Teleskoprohres in Anlage ist, wobei das Teleskoprohr an seiner äußeren zylindrischen Mantelfläche eine Rastausnehmung besitzt, in die das Sicherungselement bei maximal aus dem Standrohr herausbewegtem Teleskoprohr radial einrastbar ist.

Die ortsfeste Anordnung des Sicherungselements im Standrohr vermeidet ein Sicherungselement am unteren Ende des Teleskoprohrs. Mit der Verlagerung des Sicherungselements aus dem kritischen Bereich des Teleskoprohrs in den nahezu ungefährdeten Bereich im Standrohr werden die Querbelastungen auf das Sicherungselement infolge eines von der Längsachse abweichenden Kraftangriffs erheblich reduziert. Des weiteren verkürzt sich infolge der Verlagerung des Sicherungselements die Gesamtlänge des Teleskoprohrs. Dieser Vorteil wirkt sich insbesondere bei Sicherungselementen mit größerer axialer und radialer Erstreckung besonders aus. Der Durchmesser des Teleskoprohres wird dabei nicht vergrößert.

Eine besonders gute Führung auch im völlig ausgefahrenen Zustand des Teleskoprohres wird erreicht, wenn die Rastausnehmung in dem dem unteren Standrohrende zugewandten Endbereich des Teleskoprohres angeordnet ist.

Ist das Sicherungselement in einer zum Teleskoprohr hin offenen Sicherungsausnehmung des Standrohrs angeordnet, so kann der Durchmesser der Säuleneinheit gering gehalten werden.

Zur leichtgängigen Verschiebbarkeit und weitgehend spielfreien Führung des Teleskoprohres kann das Standrohr eine fest eingesetzte Führungsbuchse besitzen, in der das Teleskoprohr axial verschiebbar geführt ist, wobei die Sicherungsausnehmung des Standrohres in der Führungsbuchse ausgebildet sein kann.

Zur vollständigen Aufnahme des Sicherungselements besitzt die Sicherungsausnehmung im Standrohr eine Tiefe, die etwa der radialen Erstreckung des Sicherungselements entspricht. Dies gewährleistet ein ungehindertes Verstellen des Teleskoprohrs.

Die Aufnahme im Standrohr ist in ihrer Gestaltung an das Sicherungselement angepaßt. Im einfachsten Fall ist die Sicherungsausnehmung des Standrohres eine insbesondere radial umlaufende nutartige Sicke.

Verschiedene Funktionen können über die Sicke realisiert werden, wenn sie einen asymmetrischen Querschnitt besitzt.

Die Sicke ist als Anschlag für das Sicherungselement einsetzbar, wenn die Sicke einen radial inneren Sickengrund, eine dem oberen Standrohrende nähere Seitenwand und eine dem oberen Standrohrende fernere Seitenwand besitzt, wobei die Seitenwand rampenartig zum oberen Standrohrende geneigt und die Seitenwand etwa rechtwinklig zur Längsachse der Säuleneinheit sich zur inneren zylindrischen Mantelfläche der Führungsbuchse erstrecken. In dieser Ausgestaltung trifft das Sicherungselement bei einer Auszugsbewegung auf diese Seitenwand und führt so zu einer Begrenzung der Auszugsbewegung.

Die andere, in Auszugsrichtung weisende Seitenwand verläuft in Bezug auf die Längsachse der Säuleneinheit als Schräge. Das Sicherungselement läuft beim Einschub auf dieser Schräge auf und wird dadurch nach außen in die Sicherungsausnehmung im Standrohr gedrückt. Eine in Bezug auf die Längsachse flache Schräge führt zum Auslenken des Sicherungselementes ohne merklichen zusätzlichen Kraftaufwand.

Vorzugsweise ist auch die Rastausnehmung des Teleskoprohres eine insbesondere radial umlaufende nutartige Sicke die ebenfalls einen asymmetrischen Querschnitt besitzen kann.

Besitzt die Sicke einen radial inneren Sickengrund, eine dem oberen Standrohrende nähere Seitenwand und eine dem oberen Standrohrende fernere Seitenwand, wobei die Seitenwand rampenartig zum oberen Standrohrende geneigt und die Seitenwand etwa rechtwinklig zur Längsachse der Säuleneinheit sich zur äußeren zylindrischen Mantelfläche des Teleskoprohres erstrecken, so werden die gleichen Funktionen und Vorteile wie bei der entsprechend ausgebildeten Sicherungsausnehmung erreicht.

Die Sicherungsausnehmung und/oder die Rastausnehmung können kostengünstig mittels Umformen oder spanender Bearbeitung herstellbar sein.

Eine Bearbeitung des Teleskoprohrs zur Erzeugung der Rastausnehmung entfällt, wenn an dem Teleskoprohr ein separates Bauteil angeordnet ist, dessen Umfang eine radial umlaufende Rastausnehmung aufweist.

Das Sicherungselement kann das Sicherungselement mit radial nach innen gerichteter Vorspannung in der Sicherungsausnehmung des Standrohres angeordnet sein.

Das Sicherungselement ist besonders einfach gestaltet, wenn es aus einem elastischen Material besteht und in der Aufnahme des Standrohrs unter Spannung angeordnet ist. Dadurch tritt das Sicherungselement von selbst in die im Teleskoprohr befindliche Rastausnehmung ein und sichert so die Säuleneinheit gegen eine ungewollte Demontage. Auf zusätzliche Elemente zum Bewegen des Sicherungselements kann somit verzichtet werden.

Ein aus Metall bestehendes Sicherungselement hat sich als günstig erwiesen, da diese Sicherungselemente auch bei größeren Belastungen ausreichende Festigkeit und Stabilität aufweisen.

Als eine vorteilhafte Ausgestaltung des Sicherungselements hat sich ein ringförmiges Federelement herausgestellt, welches einen radial nach innen federnden Bereich wie federnden Zungen aufweist. Damit tritt nur der federnde Bereich in die Rastausnehmung im Teleskoprohr ein, wenn sich die Sicherungsausnehmung im Standrohr und die Rastausnehmung im Teleskoprohr gegenüberstehen.

Eine besonders einfache Ausgestaltung erfährt das Sicherungselement, wenn es als Federring ausgebildet ist. Dieses Sicherungselement stellt aufgrund seines einfachen Aufbaus die geringsten Anforderungen an die Sicherungsausnehmung und Rastausnehmung, so daß mit einem Federring eine sehr kostengünstige und effektive Sicherung der Säuleneinheit gegen eine ungewollte Demontage erreicht wird.

Ausführungsbeispiele der Erfindung sind in der Zeichnung dargestellt und werden im folgenden näher erläutert. Es zeigen
- Figur 1:: eine erste Ausführungsform einer Säuleneinheit im eingeschobenen Zustand,
- Figur 2:: die Säuleneinheit nach Figur 1 im ausgezogenen Zustand,
- Figur 3:: die Sicherungsausnehmung und die Rastausnehmung der Säuleneinheit nach Figur 2 in vergrößerter Darstellung,
- Figur 4:: eine zweite Ausführungsform einer Säuleneinheit im eingeschobenen Zustand
- Figur 5:: die Säuleneinheit aus Figur 4 im ausgezogenen Zustand.

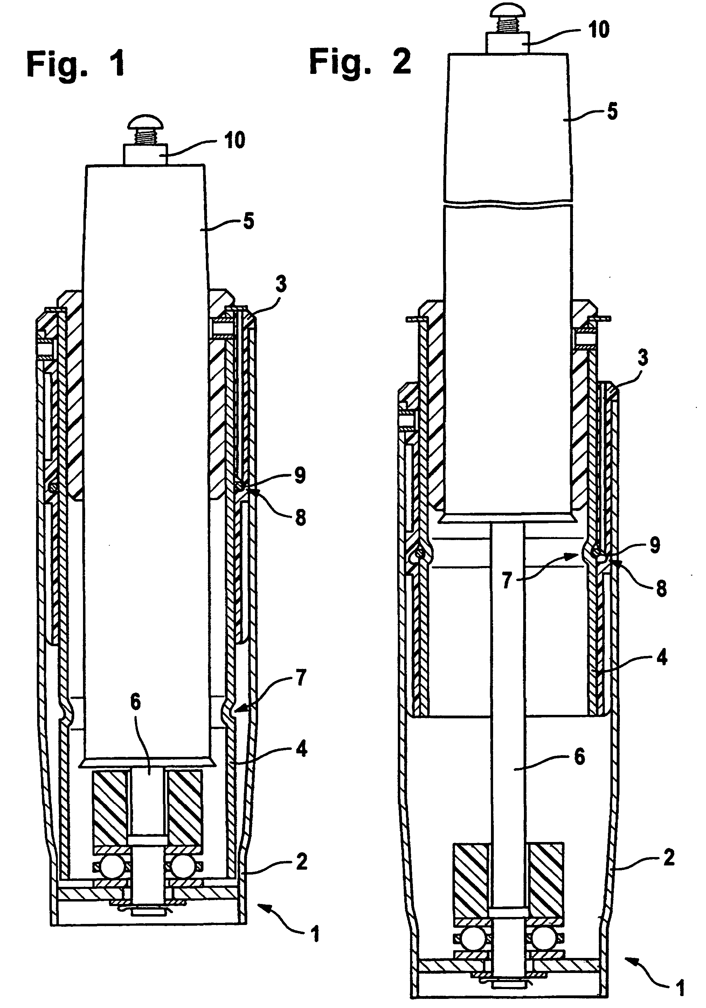

Die im Schnitt dargestellte Säuleneinheit 1 in Figur 1 besteht aus einem Standrohr 2, in das eine Führungsbuchse 3 eingesetzt ist. In der Führungsbuchse 3 ist ein axial bewegliches Teleskoprohr 4 angeordnet, welches eine Gasfeder 5 aufnimmt. Die Kolbenstange 6 der Gasfeder 5 ist mit ihrem unteren Ende drehbar im Standrohr 2 eingespannt. Die Kolbenstange 6 ist bis auf ihr unteres Ende in der Gasfeder 5 aufgenommen.

Das Teleskoprohr 4 weist im unteren Bereich eine radial umlaufend am äußeren Umfang verlaufende Sicke 7 auf. Die Sicke 7 wurde durch Umformen im Teleskoprohr 4 ausgebildet. In der Mitte der Führungsbuchse 3 ist am inneren Umfang ebenfalls eine radial umlaufende Sicke 8 ausgebildet. Die Sicke 8 befindet sich damit in einem Bereich, in dem bei einem Kräfte- oder Momentenangriff an der Säuleneinheit 1 kaum Belastungen auftreten. Diese treten im stärkeren Maße an den beiden Enden des Teleskoprohrs 4 auf.

In der Sicke 8 ist ein Federring 9 mit kreisförmigem Querschnitt angeordnet. Der Innendurchmesser des Federrings 9 ist kleiner als der Außendurchmesser des Teleskoprohrs 4. Mit der Anordnung in der Sicke 8 ist der Federring 9 aufgeweitet und umspannt daher mit radial nach innen gerichteter Vorspannung das Teleskoprohr 4. Durch die Sicke 8 wird der aufgeweitete Federring 9 in dieser Position gehalten.

In Figur 2 ist die Säuleneinheit 1 ausgezogen. Die Verstellung wird durch einen Auslösestößel 10 bewirkt. Dieser öffnet ein nicht dargestelltes Blockierventil in der Gasfeder 5. Beim Fehlen einer senkrecht auf die Säuleneinheit 1 wirkenden Kraft wird aufgrund des fest eingespannten Endes der Kolbenstange 6 die Gasfeder 5 nach oben bewegt. In dieser Ausfahrrichtung nimmt die Gasfeder 5 das Teleskoprohr 4 über einen durch eine Vergrößerung des Gasfederdurchmessers gebildeten Anschlag mit. Diese Ausfahrbewegung des Teleskoprohrs 4 ist bis zum Erreichen der Sicke 7 durch die Sicke 8 möglich. Sobald sich beide Sicken 7, 8 einander gegenüberstehen, verkleinert der Federring 9 seinen Außendurchmesser, indem er sich mit einem Teil seiner Stärke radial in die Sicke 7 bewegt und eine Blockierung bildet. Dadurch wird die Bewegung des Teleskoprohrs 4 in Auszugsrichtung begrenzt.

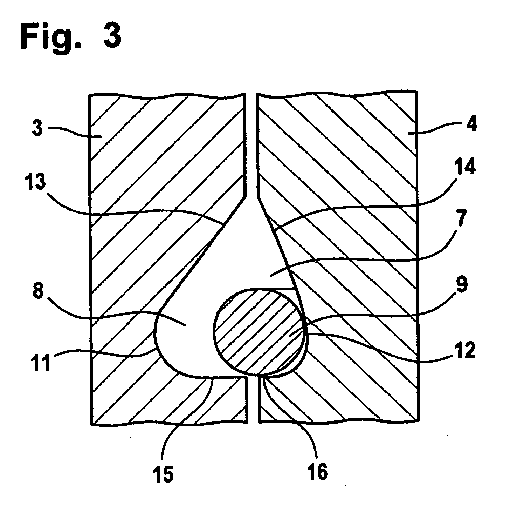

Figur 3 zeigt die sich gegenüberliegenden Sicken 7, 8 in vergrößerter Darstellung. Beide Sicken 7, 8 besitzen einen asymmetrischen Querschnitt. Die Tiefe der beiden Sicken 7, 8 wird durch je einen Sickengrund 11, 12 begrenzt. An den Sickengrund 11, 12 schließen sich nach oben und damit in Ausfahrrichtung rampenartig Seitenwände 13,14 an. Auf der gegenüberliegenden Seite sind in Einschubrichtung anschlagartige Seitenwände 15, 16 gebildet. Die Seitenwände 13, 14 verlaufen bezüglich der Längsachse der Säuleneinheit 1 in einem flachen Winkel bis zum Außenumfang der Führungsbuchse 3 bzw. des Teleskoprohres 4. Die Seitenwände 15, 16 sind dagegen senkrecht zur Längsachse der Säuleneinheit ausgerichtet und verlaufen ebenfalls bis zum Außenumfang der Führungsbuchse 3 bzw. des Teleskoprohres 4.

Der Federring 9 befindet sich in der Sicke 7 des Teleskoprohrs 4. Die Sicke 7 besitzt eine Tiefe, die geringer als der Querschnitt des Federrings 9 ist. Dadurch wird der Federring 9 nicht vollständig von der Sicke 7 aufgenommen. Ein Teil des Federrings 9 steht bis in die Sicke 8 der Führungsbuchse 3 über. Wird die Säuleneinheit 1 in Auszugsrichtung bewegt, wird das Teleskoprohr 4 von der Gasfeder nach oben mitgenommen. Der aus der Sicke 8 in die Sicke 7 einrastende Federring 9 wird von der radial gerichteten Seitenwand 16 mitgenommen und gegen die rampenartige Seitenwand 13 gedrückt. Der Federring 9 kann nicht ausweichen. Das Teleskoprohr 4 blockiert und wird somit in seiner Auszugbewegung begrenzt. Die Sicken 7, 8 wirken in Auszugsrichtung als Anschlag. In Einschubrichtung, wenn das Teleskoprohr 4 nach unten bewegt wird, nimmt die Seitenwand 14 den Federring 9 mit. Dieser trifft auf die Seitenwand 15, die die Abwärtsbewegung des Federrings 9 begrenzt. Aufgrund der schrägen Ausbildung der Seitenwand 14 wird der Federring 9 nach außen gedrückt, so daß er sich federnd aufweitet. Er wird somit am Teleskoprohr 4 gespreizt und über die Seitenwand 14 abgestreift. Der Federring 9 ist wieder in der Sicke 8 der Führungsbuchse 3 aufgenommen.

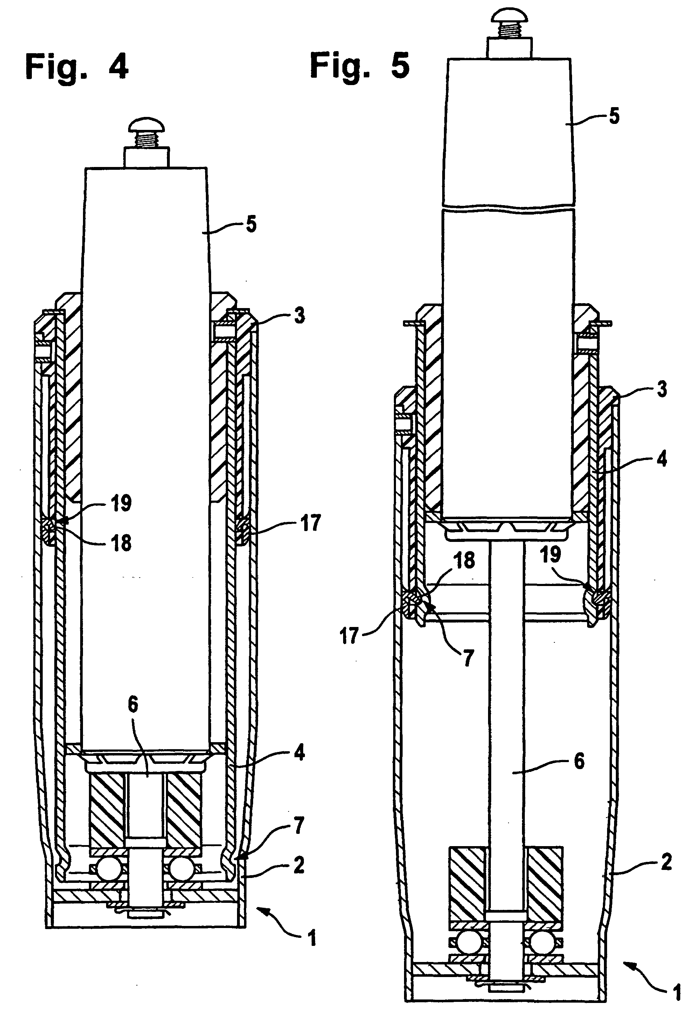

Die Säuleneinheit 1 in Figur 4 besitzt den gleichen Aufbau wie in Figur 1. Als Sicherungselement ist ein Federelement 17 mit mehreren radial nach innen federnden Zungen 18 eingesetzt. Das Federelement 17 ist zwischen Standrohr 2 und Führungsbuchse 3 eingespannt. Zusätzlich weist die Führungsbuchse 3 mehrere radial durchgehende Ausnehmungen 19 auf, die der Anzahl der Zungen 18 entsprechen. Die Ausnehmungen 19 sind so ausgebildet, daß die Zungen 18 durch sie hindurch treten können. Das Teleskoprohr 4 drückt die Zungen 18 radial nach außen, so daß sie sich vollständig in den Ausnehmungen 19 befinden.

Stehen sich die Sicke 7 und die Ausnehmungen 19, wie in Figur 5 dargestellt, gegenüber, entspannen sich die Zungen 18 aufgrund ihrer Elastizität radial nach innen. Die Zungen 18 treten dabei durch die Ausnehmungen 19 in die Sicke 7. Die Sicke 7 besitzt einen Querschnitt wie in Figur 3. Bei einer Auszugsbewegung des Teleskoprohrs 4 drückt die untere Seitenwand 16 die Zungen 18 nach oben. Diese lassen sich nicht weiter verformen, so daß damit ein Anschlag für das Teleskoprohr 4 erzeugt wird, der die Auszugsbewegung begrenzt. Bei einer Einschubbewegung des Teleskoprohrs 4 läuft die Seitenwand 14 auf die Zungen 18 auf und drückt diese aus der Sicke 7 radial nach außen in die Ausnehmungen 19. Das Teleskoprohr 4 wird von dem Federelement 17 freigegeben und kann eingeschoben werden.

### Bezugszeichenliste

- 1: Säuleneinheit
- 2: Standrohr
- 3: Führungsbuchse
- 4: Teleskoprohr
- 5: Gasfeder
- 6: Kolbenstange
- 7: Sicke
- 8: Sicke
- 9: Federring
- 10: Auslösestößel
- 11: Sickengrund
- 12: Sickengrund
- 13: Seitenwand
- 14: Seitenwand
- 15: Seitenwand
- 16: Seitenwand
- 17: Federelement
- 18: Zungen
- 19: Ausnehmungen

## Patentansprüche

1. Säuleneinheit, insbesondere Stuhlsäuleneinheit, mit einem feststehenden Standrohr (2), das ein unteres Standrohrende und ein oberes Standrohrende besitzt, wobei im Bereich des oberen Standrohrendes in dem Standrohr (2) ein Teleskoprohr (4) und in dem Teleskoprohr (4) ein Zylinder einer Gasfeder (5) axial verschiebbar geführt ist, mit einer einseitig aus dem Zylinder der Gasfeder (5) herausragenden Kolbenstange (6), deren freies Ende im Bereich des unteren Standrohrendes an dem Standrohr (2) befestigt ist, mit einem Mitnehmeranschlag des Zylinders der Gasfeder (5), durch den das Teleskoprohr (4) bei axialer Bewegung der Gasfeder (5) aus dem Standrohr (2) mitnehmbar ist, und mit einem Sicherungselement, durch das eine axiale Bewegung des Teleskoprohres aus dem Standrohr begrenzbar ist, **dadurch gekennzeichnet, daß** das Sicherungselement an dem Standrohr (2) angeordnet ist und mit radial nach innen gerichteter federnder Vorspannung an der äußeren zylindrischen Mantelfläche des Teleskoprohres (4) in Anlage ist, wobei das Teleskoprohr (4) an seiner äußeren zylindrischen Mantelfläche eine Rastausnehmung besitzt, in die das Sicherungselement bei maximal aus dem Standrohr herausbewegtem Teleskoprohr radial einrastbar ist.

2. Säuleneinheit nach Anspruch 1,**dadurch gekennzeichnet, daß** die Rastausnehmung in dem dem unteren Standrohrende zugewandten Endbereich des Teleskoprohres (4) angeordnet ist.

3. Säuleneinheit nach einem der vorhergehenden Ansprüche, d ad u rch **gekennzeichnet**, daß das Sicherungselement in einer zum Teleskoprohr (4) hin offenen Sicherungsausnehmung des Standrohrs (2) angeordnet ist.

4. Säuleneinheit nach einem der vorhergehenden Ansprüche, **dadurch gekennzeichnet, daß** das Standrohr (2) eine fest eingesetzte Führungsbuchse (5) besitzt, in der das Teleskoprohr (4) axial verschiebbar geführt ist.

5. Säuleneinheit nach den Ansprüchen 3 und 4, **dadurch gekennzeichnet, daß** die Sicherungsausnehmung des Standrohres (2) in der Führungsbuchse (5) ausgebildet ist.

6. Säuleneinheit nach einem der vorhergehenden Ansprüche, **dadurch gekennzeichnet, daß** die Sicherungsausnehmung im Standrohr (2) eine Tiefe besitzt, die etwa der radialen Erstreckung des Sicherungselements (9, 17) entspricht.

7. Säuleneinheit nach einem der vorhergehenden Ansprüche, **dadurch gekennzeichnet, daß** die Sicherungsausnehmung des Standrohres (2) eine insbesondere radial umlaufende nutartige Sicke (8) ist.

8. Säuleneinheit nach Anspruch 7, **dadurch gekennzeichnet, daß** die Sicke (8) einen asymmetrischen Querschnitt besitzt.

9. Säuleneinheit nach Anspruch 8, **dadurch gekennzeichnet, daß** die Sicke (8) einen radial inneren Sickengrund (11), eine dem oberen Standrohrende nähere Seitenwand (13) und eine dem oberen Standrohrende fernere Seitenwand (15) besitzt, wobei die Seitenwand (13) rampenartig zum oberen Standrohrende geneigt und die Seitenwand (15) etwa rechtwinklig zur Längsachse der Säuleneinheit (1) sich zur inneren zylindrischen Mantelfläche der Führungsbuchse (3) erstrecken.

10. Säuleneinheit nach einem der vorhergehenden Ansprüche, **dadurch gekennzeichnet, daß** die Rastausnehmung des Teleskoprohres (4) eine insbesondere radial umlaufende nutartige Sicke (7) ist.

11. Säuleneinheit nach Anspruch 10, **dadurch gekennzeichnet, daß** die Sicke (7) einen asymmetrischen Querschnitt besitzt.

12. Säuleneinheit nach Anspruch 11, **dadurch gekennzeichnet, daß** die Sicke (7) einen radial inneren Sickengrund (12), eine dem oberen Standrohrende nähere Seitenwand (14) und eine dem oberen Standrohrende fernere Seitenwand (16) besitzt, wobei die Seitenwand (14) rampenartig zum oberen Standrohrende geneigt und die Seitenwand (16) etwa rechtwinklig zur Längsachse der Säuleneinheit (1) sich zur äußeren zylindrischen Mantelfläche des Teleskoprohres (4) erstrecken.

13. Säuleneinheit nach einem der vorhergehenden Ansprüche, **dadurch gekennzeichnet, daß** die Rastausnehmung und/oder die Sicherungsausnehmung mittels Umformen oder spanender Bearbeitung erzeugt ist.

14. Säuleneinheit nach einem der Ansprüche 1 bis 12, **dadurch gekennzeichnet, daß** die Rastausnehmung als separates Bauteil an dem Teleskoprohr (4) angeordnet ist.

15. Säuleneinheit nach einem der vorhergehenden Ansprüche, **dadurch gekennzeichnet, daß** das Sicherungselement mit radial nach innen gerichteter Vorspannung in der Sicherungsausnehmung des Standrohres (2) angeordnet ist.

16. Säuleneinheit nach einem der vorhergehenden Ansprüche, **dadurch gekennzeichnet, daß** das Sicherungselement aus einem elastischen Material besteht.

17. Säuleneinheit nach Anspruch 16, **dadurch gekennzeichnet, daß** das Sicherungselement aus Metall besteht.

18. Säuleneinheit nach einem der vorhergehenden Ansprüche, **dadurch gekennzeichnet, daß** das Sicherungselement ein Federelement (17) mit nach radial innen federnden Zungen (18) ist.

19. Säuleneinheit nach einem der Ansprüche 1 bis 17, **dadurch gekennzeichnet, daß** das Sicherungselement ein Federring (9) ist.

## Claims

1. Column unit, in particular a column unit for a chair, having a fixed upright tube (2) with a bottom upright-tube end and a top upright-tube end, in which case, in the region of the top upright-tube end, a telescopic tube (4) is guided in an axially displaceable manner in the upright tube (2) and a cylinder of a pneumatic spring (5) is guided in an axially displaceable manner in the telescopic tube (4), having a piston rod (6) which projects out of the cylinder of the pneumatic spring (5) on one side and of which the free end is fastened on the upright tube (2) in the region of the bottom upright-tube end, having a carry-along stop of the cylinder of the pneumatic spring (5), by means of which the telescopic tube (4) can be carried along out of the upright tube (2) when the pneumatic spring (5) is moved axially, and having a securing element by means of which it is possible to limit an axial movement of the telescopic tube out of the upright tube, **characterized in that** the securing element is arranged on the upright tube (2) and butts against the outer cylindrical lateral surface of the telescopic tube (4) with radially inwardly directed resilient prestressing, the telescopic tube (4) having a latching recess on its outer cylindrical lateral surface, and it being possible for the securing element to be latched radially into said latching recess when the telescopic tube has been moved out of the upright tube to the maximum extent.

2. Column unit according to Claim 1, **characterized in that** the latching recess is arranged **in that** end region of the telescopic tube (4) which is directed towards the bottom upright-tube end.

3. Column unit according to one of the preceding claims, **characterized in that** the securing element is arranged in a securing recess of the upright tube (2), said recess being open in the direction of the telescopic tube (4).

4. Column unit according to one of the preceding claims, **characterized in that** the upright tube (2) has a firmly inserted guide bushing (3), in which the telescopic tube (4) is guided in an axially displaceable manner.

5. Column unit according to Claims 3 and 4, **characterized in that** the securing recess of the upright tube (2) is formed in the guide bushing (3).

6. Column unit according to one of the preceding claims, **characterized in that** the securing recess in the upright tube (2) has a depth which corresponds approximately to the radial extent of the securing element (9, 17).

7. Column unit according to one of the preceding claims, **characterized in that** the securing recess of the upright tube (2) is an, in particular, radially encircling groove-like bead (8).

8. Column unit according to Claim 7, **characterized in that** the bead (8) has an asymmetric cross section.

9. Column unit according to Claim 8, **characterized in that** the bead (8) has a radially inner bead base (11), a side wall (13) which is closer to the top upright-tube end, and a side wall (15) which is further away from the top upright-tube end, the side wall (13) being inclined in a ramp-like manner in relation to the top upright-tube end, and the side wall (15) extending to the inner cylindrical lateral surface of the guide bushing (3), approximately at right angles to the longitudinal axis of the column unit (1).

10. Column unit according to one of the preceding claims, **characterized in that** the latching recess of the telescopic tube (4) is an, in particular, radially encircling groove-like bead (7).

11. Column unit according to Claim 10, **characterized in that** the bead (7) has an asymmetric cross section.

12. Column unit according to Claim 11, **characterized in that** the bead (7) has a radially inner bead base (12), a side wall (14) which is closer to the top upright-tube end, and a side wall (16) which is further away from the top upright-tube end, the side wall (14) being inclined in a ramp-like manner in relation to the top upright-tube end, and the side wall (16) extending to the outer cylindrical lateral surface of the telescopic tube (4), approximately at right angles to the longitudinal axis of the column unit (1).

13. Column unit according to one of the preceding claims, **characterized in that** the latching recess and/or the securing recess are/is produced by means of deformation or machining.

14. Column unit according to one of Claims 1 to 12, **characterized in that** the latching recess is arranged as a separate component on the telescopic tube (4).

15. Column unit according to one of the preceding claims, **characterized in that** the securing element is arranged with radially inwardly directed prestressing in the securing recess of the upright tube (2).

16. Column unit according to one of the preceding claims, **characterized in that** the securing element consists of an elastic material.

17. Column unit according to Claim 16, **characterized in that** the securing element consists of metal.

18. Column unit according to one of the preceding claims, **characterized in that** the securing element is a spring element (17) with radially inwardly directed tongues (18).

19. Column unit according to one of Claims 1 to 17, **characterized in that** the securing element is a spring ring (9).

## Revendications

1. Colonne télescopique, notamment pour une chaise, comprenant un montant tubulaire fixe (2) qui possède une extrémité de montant tubulaire inférieure et une extrémité de montant tubulaire supérieure, un tube télescopique (4) étant guidé dans la région de l'extrémité supérieure du montant tubulaire dans le montant tubulaire (2) et un cylindre d'un ressort pneumatique (5) étant guidé de manière à pouvoir coulisser axialement dans le tube télescopique (4), comprenant une tige de piston (6) sortant d'un côté du cylindre du ressort pneumatique (5), dont l'extrémité libre est fixée sur le montant tubulaire (2) dans la région de l'extrémité inférieure du montant tubulaire, comprenant une butée d'entraînement du cylindre du ressort pneumatique (5), qui permet d'entraîner le tube télescopique (4) dans le cas d'un déplacement axial du ressort pneumatique (5) hors du montant tubulaire (2), et comprenant un élément de fixation qui permet de limiter un déplacement axial du tube télescopique hors du montant tubulaire, **caractérisée en ce que** l'élément de fixation est disposé sur le montant tubulaire (2) et est en appui avec une précontrainte élastique orientée radialement vers l'intérieur contre la surface d'enveloppe cylindrique extérieure du tube télescopique (4), le tube télescopique (4) possédant sur sa surface d'enveloppe cylindrique extérieure un évidement d'encliquetage dans lequel l'élément de fixation peut être encliqueté radialement lorsque le tube télescopique est sortie au maximum du montant tubulaire.

2. Colonne télescopique selon la revendication 1, **caractérisée en ce que** l'évidement d'encliquetage est disposé dans la région d'extrémité du tube télescopique (4) tournée vers l'extrémité inférieure du montant tubulaire.

3. Colonne télescopique selon l'une quelconque des revendications précédentes, **caractérisée en ce que** l'élément de fixation est disposé dans un évidement de fixation du montant tubulaire (2) ouvert vers le tube télescopique (4).

4. Colonne télescopique selon l'une quelconque des revendications précédentes, **caractérisée en ce que** le montant tubulaire (2) possède un manchon de guidage (3) inséré fixement dans lequel le tube télescopique (4) est guidé de manière à pouvoir coulisser axialement.

5. Colonne télescopique selon les revendications 3 et 4, **caractérisée en ce que** l'évidement de fixation du montant tubulaire (2) est réalisé dans le manchon de guidage (3).

6. Colonne télescopique selon l'une quelconque des revendications précédentes, **caractérisée en ce que** l'évidement de fixation dans le montant tubulaire (2) possède une profondeur qui correspond approximativement à l'étendue radiale de l'élément de fixation (9, 17).

7. Colonne télescopique selon l'une quelconque des revendications précédentes, **caractérisée en ce que** l'évidement de fixation du montant tubulaire (2) est une moulure de type rainure (8), notamment radialement périphérique.

8. Colonne télescopique selon la revendication 7, **caractérisée en ce que** la moulure (8) possède une section transversale asymétrique.

9. Colonne télescopique selon la revendication 8, **caractérisée en ce que** la moulure (8) possède un fond de moulure radialement interne (11), une paroi latérale (13) plus proche de l'extrémité supérieure du montant tubulaire et une paroi latérale (15) plus éloignée de l'extrémité supérieur du montant tubulaire, la paroi latérale (13), inclinée en forme de rampe vers l'extrémité supérieure du montant tubulaire, et la paroi latérale (15), approximativement à angle droit par rapport à l'axe longitudinal de la colonne télescopique (1), s'étendant vers la surface d'enveloppe cylindrique intérieure du manchon de guidage (3).

10. Colonne télescopique selon l'une quelconque des revendications précédentes, **caractérisée en ce que** l'évidement d'encliquetage du tube télescopique (4) est une moulure de type rainure (7), notamment radialement périphérique.

11. Colonne télescopique selon la revendication 10, **caractérisée en ce que** la moulure (7) possède une section transversale asymétrique.

12. Colonne télescopique selon la revendication 11, **caractérisée en ce que** la moulure (7) possède un fond de moulure radialement intérieure (12), une paroi latérale (14) plus proche de l'extrémité supérieure du montant tubulaire, et une paroi latérale (16) plus éloignée de l'extrémité supérieure du montant tubulaire, la paroi latérale (14), inclinée en forme de rampe vers l'extrémité supérieure du montant tubulaire, et la paroi latérale (16), approximativement à angle droit par rapport à l'axe longitudinal de la colonne télescopique (1), s'étendant vers la surface d'enveloppe cylindrique extérieure du tube télescopique (4).

13. Colonne télescopique selon l'une quelconque des revendications précédentes, **caractérisée en ce que** l'évidement d'encliquetage et/ou l'évidement de fixation est produit par déformation ou usinage par enlèvement de copeaux.

14. Colonne télescopique selon l'une quelconque des revendications 1 à 12, **caractérisée en ce que** l'évidement d'encliquetage est disposé sous forme de composant séparé sur le tube télescopique (4).

15. Colonne télescopique selon l'une quelconque des revendications précédentes, **caractérisée en ce que** l'élément de fixation est disposé avec une précontrainte orientée radialement vers l'intérieur dans l'évidement de fixation du montant tubulaire (2).

16. Colonne télescopique selon l'une quelconque des revendications précédentes, **caractérisée en ce que** l'élément de fixation se compose d'un matériau élastique.

17. Colonne télescopique selon la revendication 16, **caractérisée en ce que** l'élément de fixation se compose de métal.

18. Colonne télescopique selon l'une quelconque des revendications précédentes, **caractérisée en ce que** l'élément de fixation est un élément formant ressort (17) avec des dents (18) élastiques dans la direction radialement interne.

19. Colonne télescopique selon l'une quelconque des revendications 1 à 17, **caractérisée en ce que** l'élément de fixation est une rondelle élastique (9).
